# FASCICULE DE BREVET EUROPEEN

(11) **EP 3 114 165 B1**
(45) Date de publication et mention de la délivrance du brevet: **19.02.2020**
(21) Numéro de dépôt: 14716618.5
(22) Date de dépôt: 14.03.2014
(51) Int. Cl.: F16D 69/02, F16D 69/00, F16D 13/64, C08K 7/14

(54) **GARNITURE DE FRICTION A RESISTANCE A L'USURE AMELIOREE, EMBRAYAGE A SEC COMPORTANT UNE TELLE GARNITURE ET PROCEDES DE FABRICATIONS D'UNE TELLE GARNITURE ET D'UN TEL EMBRAYAGE**
REIBBELAG MIT VERBESSERTER VERSCHLEISSFESTIGKEIT, TROCKENREIBUNGSKUPPLUNG MIT SOLCH EINEM BELAG UND VERFAHREN ZUR HERSTELLUNG SOLCH EINES BELAGS UND SOLCH EINER KUPPLUNG
FRICTION LINING WITH IMPROVED RESISTANCE TO WEAR, DRY FRICTION CLUTCH COMPRISING SUCH A LINING AND METHODS OF MANUFACTURING SUCH A LINING AND SUCH A CLUTCH

(30) Priorité: 07.03.2014 FR 1451882
(43) Date de publication de la demande: 11.01.2017
(73) Titulaire: Valeo Matériaux de Friction, 87020 Limoges cedex 9 (FR)
(72) Inventeur: ALIX, Isabelle, 87290 Chateauponsac (FR); COUTINHO, Jorge, 87170 Isle (FR); DREAN, Jerôme, 12084 MONDOVI (IT); TURLOTTE, Jean-Luc, 87200 Saint-Junien (FR)
(74) Mandataire: Cardon, Nicolas
(86) Numéro de dépôt international: PCT/FR2014/050604
(87) Numéro de publication internationale: WO 2015/132477

(56) Documents cités:
- EP-A1- 2 380 857
- GB-A- 1 491 460
- GB-A- 2 199 595
- US-A- 4 471 019

## Description

La présente invention concerne une garniture de friction, notamment une garniture de friction annulaire pour embrayage à sec, notamment pour véhicule automobile. La garniture de friction selon l'invention peut ainsi notamment être mise en œuvre dans un double embrayage à sec ou un embrayage pour transmission manuelle. L'invention se rapporte également à un embrayage incluant une telle garniture de friction, et à un procédé de fabrication d'une telle garniture de friction et d'un tel embrayage.

Un embrayage de véhicule automobile fonctionnant à sec comprend, d'une manière générale, un disque de friction portant sur chacune de ses faces des garnitures de friction fixées à un support éventuellement commun. Le support est fixé à un moyeu cannelé en prise avec un arbre d'entrée d'une boîte de vitesses. Un amortisseur de torsion est, en général, intercalé entre le ou les supports des garnitures de friction et le moyeu cannelé. En outre, un dispositif de progressivité est classiquement placé entre les deux garnitures de friction.

Le disque de friction est, en service, placé entre, d'une part, un plateau de réaction relié directement ou indirectement au vilebrequin du moteur du véhicule et, d'autre part, un plateau de pression d'un mécanisme d'embrayage comportant un couvercle relié au plateau de réaction et un diaphragme annulaire, sollicitant axialement le plateau de pression qui est relié en rotation au couvercle tout en pouvant se déplacer axialement par rapport à celui-ci de manière limitée.

En position embrayée, les garnitures du disque de friction sont serrées entre le plateau de réaction et le plateau de pression, de sorte que le couple de rotation du moteur thermique est transmis à l'arbre d'entrée de boîte de vitesses.

Une garniture de friction doit permettre de transmettre un couple du moteur vers la boîte de vitesses et réciproquement. Pour ce faire, la garniture doit avoir de nombreuses propriétés mécaniques comme une bonne résistance thermique. En outre, une garniture de friction doit présenter un coefficient de frottement relativement élevé et homogène sur la surface de la garniture de friction pour transmettre un couple moteur vers la boîte de vitesses. Une garniture de friction doit aussi avoir une bonne résistance à l'usure, c'est-à-dire que son coefficient de frottement doit également rester sensiblement constant sur la longueur de la durée de vie de l'embrayage (tout du moins après une étape initiale de rodage). L'épaisseur de la garniture de frottement ne doit pas varier de manière trop importante non plus durant la durée de vie de l'embrayage. En outre, le coefficient de frottement de la garniture de friction doit également varier le moins possible malgré l'usure de cette garniture de friction. Cela est particulièrement important pour les garnitures de friction de double embrayage à sec. Ces embrayages sont en effet pilotés électroniquement. L'électronique de commande est d'autant plus complexe et coûteuse qu'elle doit pouvoir s'adapter à des conditions d'utilisation variables, comme en cas de variation du coefficient de frottement de la garniture de friction.

Il est connu une garniture de friction à toron de fibres de verre continu. Dans une telle garniture de friction, un unique toron est enroulé pour former la structure mécanique annulaire de base de la garniture de friction. Le toron de fibre de verre continu permet ainsi d'assurer la résistance à la rupture par centrifugation d'une telle garniture de friction. Une telle garniture est cependant coûteuse du fait de la grande quantité de fibre de verre utilisée et de son procédé de mise en œuvre. Ce dernier inclut en effet une imprégnation de la matrice et des charges sur le toron continu, un séchage et une mise en forme avant une étape de surmoulage.

Par ailleurs, le document JP-A-2008 231 172 propose une garniture de friction réalisée par moulage d'une composition incluant des fibres de basalte coupées regroupées sous forme de torons, par ensimage. L'ensimage consiste à déposer un agent de liaison assurant la cohésion des fibres entre elles. Selon JP-A-2008 231 172, la quantité d'agent de liaison utilisée est comprise entre 0,2 et 0,5%, en masse, par rapport à la masse des fibres de basaltes.

Cependant, il a été constaté que l'utilisation d'un agent de liaison dans les quantités indiquées dans JP-A-2008 231 172 ne permet pas d'obtenir une garniture de friction présentant une résistance à l'usure satisfaisante.

Par ailleurs, DE-A-32 25 214 décrit un matériau de friction comportant de 5 à 60%, en masse, de fibres de verre. Les fibres de verre y sont sous forme de torons coupés dont la cohésion n'est pas altérée durant la formation du matériau de friction. De manière connue, les torons de fibres de verre coupés ont alors une fonction de charge de friction. Selon DE-A-32 25 214, un tel matériau de friction peut être obtenu par mélange, sans qu'il ne soit précisé les paramètres du mélange. En pratique, il est connu que le mélange a tendance à détériorer la cohésion des torons de fibres de verre coupés. En outre, DE-A-32 25 214 ne donne aucune indication concernant la définition des torons ou leurs dimensions.

EP 2 380 857 A1 décrit une garniture de friction comportant 1-30 vol% de fibres de verre qui sont groupées sous forme de torons de fibres avec une longueur entre 1 et 25 mm et une masse linéique comprise entre 30 et 1000 tex.

Un but de l'invention est de fournir une garniture de friction ne présentant pas les inconvénients mentionnés plus haut. Notamment, l'invention vise à fournir une garniture de friction présentant une résistance à l'usure améliorée et qui reste facilement réalisable. De préférence, la garniture de friction présente également un coefficient de frottement stable.

À cette fin, l'invention propose une garniture de friction, notamment pour embrayage à sec, en particulier pour véhicule automobile, comportant, en masse, 10 à 20%, de préférence 12 à 15%, de fibres de verre, plus de 90 %, en masse, des fibres de verres étant groupées sous forme de torons de fibres de verre de longueur supérieure à 2,5 mm, de préférence supérieure à 2,8 mm, et inférieure à 4 mm, de préférence inférieure à 3,6 mm, plus de 30% en nombre des torons de fibres de verre présentant une largeur supérieure à 0,5 mm.

En effet, de manière surprenante, les inventeurs ont découvert que la garniture de friction présente une résistance à l'usure améliorée lorsqu'elle comporte une quantité relativement importante de torons de fibres de verre coupés de grande taille.

Selon des modes de réalisation préférés, l'invention présente une ou plusieurs caractéristiques suivantes, prises seules ou en combinaison :
- les torons de fibres de verre présentent une largeur moyenne supérieure à 0,4 mm, de préférence supérieure à 0,45 mm ;
- 30% en nombre de torons de fibres de verre ou moins présentent une largeur inférieure à 0,25 mm ;
- La garniture de friction comprend, en masse :
   - 20 à 40%, de préférence 30 à 35%, de résine liante ; et/ou
   - 0 à 5% de fibres autres que des fibres de verre ; et/ou
   - 10 à 30%, de préférence 20 à 25%, d'autres composants organiques ; et/ou
   - le complément à 100% d'autres composants inorganiques, de préférence de 10%, de préférence encore de 20%, à 40%, de préférence encore à 30% ;
- les fibres de verre :
   - sont de type E, comprenant, en masse :
      ∘ 50 à 60%, de préférence sensiblement 54%, de SiO₂ amorphe ;
      ∘ 10 à 15%, de préférence sensiblement 14 %, d'Al₂O₃ ;
      ∘ 20 à 30%, de préférence sensiblement 25%, de CaO ;
      ∘ 0 à 5%, de préférence 3%, de MgO ; et/ou
   - sont de type Roving et/ou sont ensimées avec un ensimage compatible avec les résines phénoliques et/ou polyesters, l'ensimage représentant entre 0,5 et 2% de la masse des fibres de verre, de préférence 0,8% de la masse des fibres de verre ; et/ou présentent
   - une masse linéique comprise entre 400 et 1000 tex, de préférence égale à 600 tex, et/ou
   - une masse volumique apparente supérieure à 0,55 g/cm³, de préférence supérieure à 0,6 g/cm³, et inférieure à 1 g/cm³, de préférence inférieure à 0,8 g/cm³, et/ou
   - une vitesse d'écoulement comprise entre 2,2 et 3,2 cm³/s, de préférence sensiblement égale à 2,7 cm³/s ;
- la résine liante est choisie parmi le groupe constitué d'une résine phénolique, novolaque ou résol, d'une résine mélamine formaldéhyde, d'une résine RFL, d'une résine époxy, d'une résine polyméthyl siloxane, poly imide, polyamide imide, et des mélanges de celles-ci ; et/ou
- les autres composants organiques sont choisis dans le groupe constitué de noix de cajou, de noir de carbone, de graphite, de charbon actif, de caoutchouc NBR, de caoutchouc SBR, et des mélanges de ceux-ci ; et/ou
- les autres composants inorganiques sont choisis dans le groupe constitué de poudre de cuivre, de poudre de laiton, de sulfate de baryum, de carbonate de calcium, d'oxyde de fer micacé, de zircone stabilisée, de zéolithe, de kaolin calciné, et des mélanges de ceux-ci ; et/ou
- les autres fibres que les fibres de verre sont choisies parmi le groupe constitué de fibres de poly-acrylonitrile, de fibres de cellulose, de fibres d'aramide, de fibres de carbone et des mélanges de celles-ci.

Selon un autre aspect, l'invention se rapporte à un embrayage à sec, en particulier pour véhicule automobile, comportant au moins une garniture de friction, de préférence au moins deux, de préférence encore au moins quatre, telle que décrite ci-avant dans toutes ses combinaisons.

Selon un autre aspect également, l'invention vise un procédé de fabrication d'une garniture de friction, comprenant les étapes consistant à :
a) fournir des fibres de verre sous forme de torons coupés,
b) mélanger les torons coupés avec l'ensemble des autres composants dans une cuve munie d'un mélangeur pour former un mélange,
c) mettre en forme le mélange, notamment par surmoulage sur un support, de préférence métallique,
   les fibres de verre, les autres composants et les étapes consistant à mélanger et à mettre en forme le mélange étant adaptés de manière à obtenir, à l'issue de l'étape c), une garniture de friction telle que décrite ci-avant, dans toutes ses combinaisons.

L'étape a) peut comprendre les sous-étapes consistant à :
a1) former des filaments de fibres de verre à travers des platines à cavités micrométriques,
a2) pulvériser une solution aqueuse contenant un agent de cohésion pour assembler les filaments de fibres de verre ensemble et former ainsi un toron de filaments,
a3) optionnellement, séchage du toron de filaments pour former un toron de fibres de verre,
a4) découpe du toron de filaments ou de fibres de verre, le cas échéant, par exemple au moyen de rouleaux cylindriques munis de couteaux espacés de la longueur de coupe désirée, et
a5) optionnellement, séchage du toron de filaments coupé.

Le mélangeur peut être choisi parmi le groupe constitué d'un mélangeur à pales, d'un mélangeur à socs, d'un mélangeur à couteaux rotatifs et des combinaisons de ceux-ci.

Enfin, l'invention se rapporte également à un procédé de fabrication d'un embrayage, notamment d'un embrayage à sec, en particulier pour véhicule automobile, tel que décrit ci-avant, comprenant les étapes consistant à :
i) fournir une garniture de friction telle que décrite ci-avant, dans toutes ses combinaisons, en particulier en mettant en œuvre un procédé de fabrication tel que décrit ci-avant, dans toutes ses combinaisons ; et
ii) assembler la garniture de friction dans l'embrayage de manière qu'elle puisse être sélectivement enserrée entre un plateau de pression et un plateau de réaction de l'embrayage.

L'invention sera mieux comprise à la lecture de la description qui va suivre, en référence aux dessins annexés dans lesquels :
- La figure 1 représente un exemple de garniture de friction ;
- Les figures 2 et 3 représentent schématiquement deux coupes dans des garnitures de friction distinctes ;
- La figure 4 représente schématiquement un procédé de réalisation d'une garniture de friction telle qu'illustrée à la figure 1 ;
- Les figures 5 et 6 représentent schématiquement deux exemples de dispositifs de mélange pouvant être mis en œuvre dans le procédé de la figure 4 ;
- La figure 7 représente schématiquement un procédé de fourniture de torons de fibres de verre coupés, selon deux alternatives ;
- La figure 8 représente schématiquement un dispositif de détermination de la vitesse d'écoulement de torons de fibres de verre coupés ;
- La figure 9 représente un agrandissement d'une surface de friction de trois exemples de garnitures de friction ; et
- La figure 10 représente la variation du coefficient de frottement des trois garnitures de la figure 9 au cours d'un test d'usure.

On entend par fibre un corps solide cylindrique, de préférence à section circulaire, présentant un rapport de sa longueur sur son diamètre au moins égal à 100, de préférence au moins égal 250, et, de préférence, inférieur à 500.

On appelle toron, par exemple de fibres de verre, un groupe de portions de fibres de verre reliées entre elle par un agent de liaison pour former un corps sensiblement cylindrique, de préférence à section circulaire. Un toron comporte au moins une centaine de portions de fibres distinctes, de préférence plusieurs centaines, de préférence encore plusieurs milliers, de manière encore plus préférée, plusieurs centaines de milliers.

On appelle longueur d'un toron ou d'une fibre sa plus grande dimension, c'est-à-dire sa dimension selon sa direction principale d'extension.

On appelle largeur ou diamètre d'un toron ou d'une fibre la plus grande dimension de sa section transversale, mesurée dans un plan sensiblement normal à la direction principale d'extension du toron ou de la fibre.

Par ailleurs, on appelle résine une composition chimique initialement visqueuse pouvant se solidifier, par exemple sous l'effet de la chaleur (résine thermodurcissable), par réticulation.

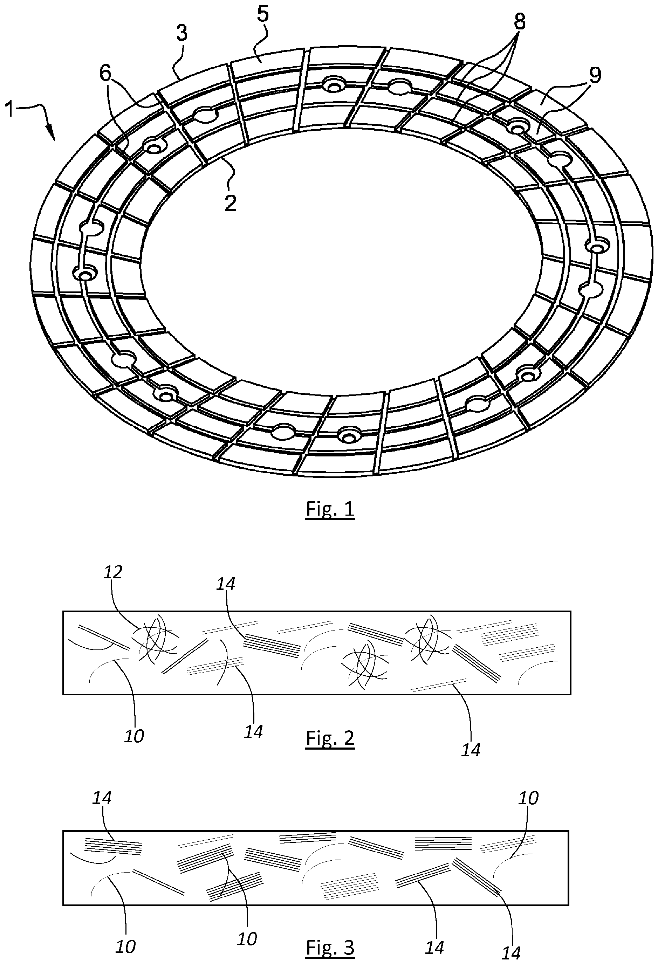

La figure 1 représente une garniture de friction 1 annulaire d'embrayage à sec pour véhicule automobile. Une telle garniture est destinée à être solidarisée à un disque de friction, lequel, pour que l'embrayage transmette un couple, peut être enserré entre un plateau de pression et un plateau de réaction. Une telle garniture peut notamment être mise en œuvre dans un embrayage classique, à sec, ou dans un embrayage double à sec. De tels embrayages comportent classiquement deux garnitures de friction, respectivement quatre.

La garniture de friction comporte des bords radialement interne 2 et externe 3. La garniture de friction 1 comporte également une face liée à un renfort, par exemple un clinquant ou un support en acier, et une face de friction 5, opposée.

Sur la face de friction 5, la garniture de friction 1 comprend des rainures 6. La surface de friction 5 comporte en outre trois secondes rainures 8 annulaires, de forme circulaire et coupant les premières rainures 6. Les rainures 6, 8 sont régulièrement espacées les unes des autres et délimitent entre elles des plots 9.

L'épaisseur de la garniture 1 est de l'ordre de 2 mm, pouvant varier de 1,5 mm à 4 mm. La profondeur des rainures 6, 8 peut varier entre 25 et 100% de l'épaisseur de la garniture 1.

La garniture de friction est réalisée en un matériau comprenant des fibres de verre. Comme cela sera décrit plus en détails ci-après, le matériau est obtenu par mélange de différents composants incluant des torons de fibres de verre coupés. Comme l'illustrent les figures 2 et 3, les fibres de verres peuvent alors se retrouver dans la garniture de friction sous différentes formes, à savoir :
- des fibres de verre isolées 10 ;
- des fibres de verre enchevêtrées 12 ; ou
- des torons de fibres de verre 14, notamment des torons de fibres de verre qui ont partiellement perdu de la cohésion entre les fibres de verre qui les composent.

Les fibres de verres isolées et enchevêtrées proviennent de torons dont la cohésion a été réduite du fait du mélange.

Cependant, les inventeurs ont constaté que, de manière surprenante, pour obtenir une meilleure résistance à l'usure, la garniture devait présenter une grande quantité de torons de fibres de verre, de tailles relativement importantes, comme cela est illustré sur la figure 3, notamment de torons de fibres de verres présentant un rapport longueur sur largeur compris entre 5 et 7,5. En particulier, une garniture de friction présentant une excellente résistance à l'usure est obtenue quand elle comporte, en masse, au moins 10%, de préférence au moins 12%, et au plus 20%, de préférence au plus 15%, de fibres de verre, que 90 %, en masse, des fibres de verres présentes dans la garniture sont groupées sous forme de torons de fibres de verre de longueur supérieure à 2,5 mm, de préférence supérieure à 2,8 mm, et inférieure à 4 mm, de préférence inférieure à 3,6 mm, plus de 30%, en nombre, des torons de fibres de verre présentant une largeur supérieure à 0,5 mm.

Il a en effet été constaté que lorsque les torons ont une largeur inférieure à 0,5 mm et ou un rapport longueur sur largeur compris entre 10 et 15, ils ne permettent pas d'assurer une bonne résistance à l'usure de la garniture de friction. Ils sont donc à éviter dans la garniture de friction. Par ailleurs, les torons ayant subi une désolidarisation des fibres de verres les composant s'ouvrent ou s'éclatent, ce qui peut générer la dispersion de fibres isolées dans la matrice de la garniture de friction et/ou l'agrégation de plusieurs fibres sous forme d'enchevêtrements sensiblement sphériques de fibres de verres. Une telle répartition des fibres de verre génère une instabilité du coefficient de frottement, ainsi qu'une dégradation de l'usure par arrachement de fibres moins bien liées dans la matrice. Ces agrégats de fibres de verre, de dimensions réduites par rapport aux torons initiaux, sont donc à éviter. C'est pourquoi, de préférence, 30% en nombre de torons de fibres de verre ou moins présentent une largeur inférieure à 0,25 mm. En d'autres termes, au maximum 30% en nombre des torons de fibres de verre présentent une largeur inférieure à 0,25 mm.

Pour les mêmes raisons, il est également intéressant que la largeur moyenne des torons (c'est-à-dire la moyenne algébrique de la largeur des torons) soit supérieure à 0,4 mm, de préférence supérieure à 0,45 mm.

La composition de la garniture de friction peut notamment comprendre, outre les fibres de verres déjà mentionnées ci-dessus, en masse :
- 20 à 40%, de préférence 30 à 35%, de résine liante ; et/ou
- 0 à 5% de fibres autres que des fibres de verre ; et/ou
- 10 à 30%, de préférence 20 à 25%, d'autres composants organiques ; et/ou
- le complément à 100% d'autres composants inorganiques, de préférence de 10 à 40%.

La résine liante permet notamment d'assurer la liaison entre les différents composants du matériau constituant la garniture de friction. La résine liante permet également d'assurer la résistance mécanique en température de la garniture de friction, notamment dans une plage de 50 à 350 °C. La résine liante peut notamment être choisie dans le groupe constitué d'une résine phénolique, novolaque (préparée par catalyse acide) ou de type résol (préparée par catalyse basique), d'une résine mélamine formaldéhyde, d'une résine de latex résorcinol-formaldéhyde (ou résine RFL, pour « *resorcinol-formaldehyde latex* »), d'une résine époxy, d'une résine polyméthyl siloxane, d'un résine poly imide, d'une résine polyamide imide, et des mélanges de celles-ci.

Les fibres autres que les fibres de verre peuvent notamment être choisies dans le groupe constitué de fibres de poly-acrylonitrile, de fibres de cellulose, de fibres d'aramide, de fibres de carbone et des mélanges de celles-ci. Ces fibres autres que les fibres de verre permettent une stabilisation de l'usure, du coefficient de frottement et de la résistance mécanique en température.

Les autres composants organiques peuvent notamment constituer des charges de friction. Ils peuvent notamment être choisis dans le groupe constitué de noix de cajou, de noir de carbone, de graphite, de charbon actif, de caoutchouc nitrile butadiène (ou NBR, pour « *Nitrile-Butaidene Rubber* »), de caoutchouc styrène-butadiène (ou SBR, pour « *styrene-butadiene rubber* »), et des mélanges de ceux-ci. Les caoutchoucs permettent d'assurer un confort d'utilisation de la garniture de friction, en amortissant les chocs durant les phases d'accouplement de l'embrayage.

Les autres composants inorganiques peuvent notamment être choisis dans le groupe constitué de poudre de cuivre, de poudre de laiton, de sulfate de baryum, de carbonate de calcium, d'oxyde de fer micacé, de zircone stabilisée, de zéolithe, de kaolin calciné, et des mélanges de ceux-ci. Ces autres composants inorganiques ont des fonctions variées, comme d'assurer un renfort mécanique, une dissipation thermique ou un accroissement du coefficient de frottement, entre autres exemples.

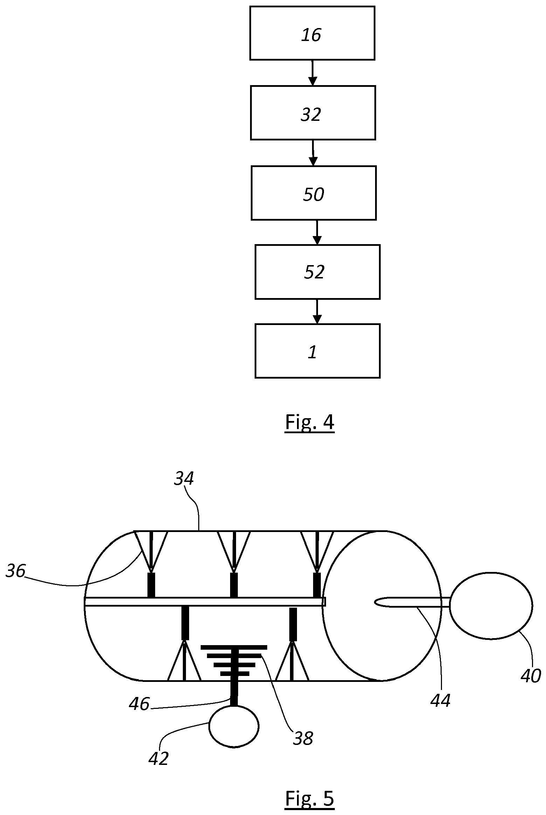

La garniture de friction selon l'invention peut notamment être obtenue en mettant en œuvre le procédé qui suit, décrit en regard des figures 4 à 7.

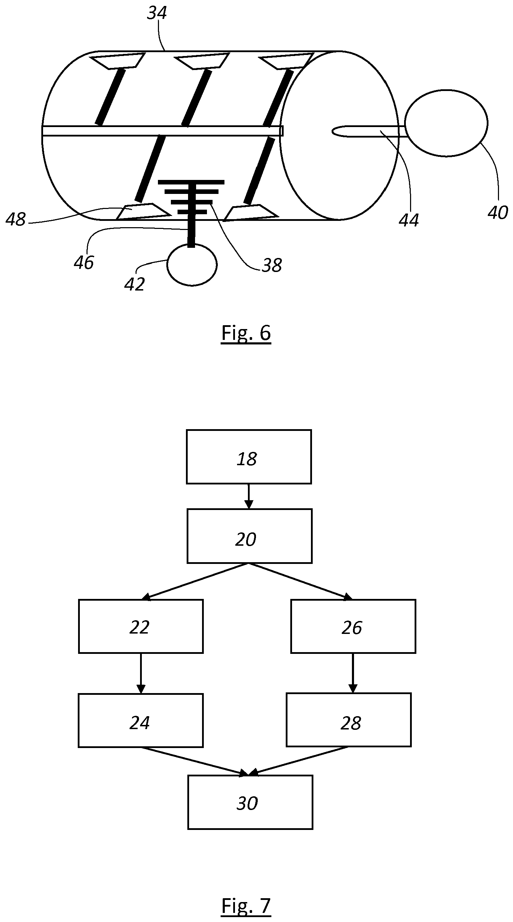

Dans un premier temps (étape 16), on fournit des torons découpés de fibres de verre et les autres composants entrant dans la composition du matériau formant la garniture de friction. Les torons de fibres de verre découpés peuvent être réalisés de différentes manières. Deux procédés alternatifs sont décrits ci-après en regard de la figure 7.

Dans les deux cas, on commence par une étape de mélange des matières composant le type de verre des fibres de verre et de fusion de ce mélange, dans un four alimenté en continu sans arrêt entre 1200 et 1500°C de ce mélange. Le mélange devient ainsi tout d'abord visqueux, vers 800 °C, puis liquide, et finalement se vitrifie. À 1500 °C, le mélange est homogène, et les dernières bulles et impuretés disparaissent. La composition reste en fusion environ 48h.

Ensuite, dans une deuxième étape 18, on procède au filage par étirement à une température sensiblement égale à 800°C, par exemple par écoulement gravimétrique et capillaire à travers des filières en platine/rhodium. Les filières sont des platines à cavités micrométriques. En fonction de l'étirement des filaments et des dimensions des cavités micrométriques, les sections obtenues des filaments de fibres de verre peuvent être comprises entre 10 et 24 µm. Le verre en fusion se transforme alors en filaments de fibre de verre, en étant étirés à grande vitesse dans les filières.

Dans une étape ultérieure 20, on procède à l'ensimage des filaments. Ces filaments de verre peuvent alors être bobinés autour d'une broche, laquelle permet la mise en tension des filaments et ainsi leur rapprochement. L'ensimage consiste à ajouter un revêtement organique protecteur pour permettre l'agglomération des filaments et ainsi former des torons. Cet ensimage est pulvérisé dans une base aqueuse sur une association des filaments étirés. L'ensimage peut notamment être pulvérisé sur les filaments à la sortie des filières.

Ensuite, il est possible de procéder de deux manières distinctes, illustrées par les deux branches parallèles sur la figure 7.

Selon une première façon, ou procédé indirect, on sèche les torons de fibres de verre continus à l'étape 22, puis on les découpe à l'étape 24. Le toron est coupé à la longueur souhaitée, notamment entre 2,8 et 3,6mm. Ceci peut être réalisé au moyen de rouleaux cylindriques munis de couteaux saillants latéralement et distants, radialement, de la longueur désirée.

Alternativement, on met en œuvre un procédé dit direct de découpe, dans lequel on découpe d'abord les torons de filaments, à l'étape 26, avant de procéder à leur séchage à l'étape 28, pour ainsi obtenir des torons de fibres de verre coupés à l'étape 30. Là encore, la découpe des torons peut être réalisée au moyen de rouleaux munis de couteaux. Plus précisément, ici, le toron continu imprégné de son ensimage de liaison est coupé humide par les rouleaux cylindriques.

Ce procédé de découpe est préféré car il permet d'assurer une meilleure cohésion entre les fibres de verre des torons. En outre, les fibres coupées obtenues sont moins altérées par le procédé de coupe. Enfin, ce procédé permet d'éviter des glissements entre les filaments.

De manière optionnelle, les torons de fibres de verre peuvent alors être pré-imprégnés d'une solution de polymères à raison de 10 à 20% en masse. La solution de polymères peut contenir une résine phénolique résol et/ou une résine RFL et/ou un latex SBR et/ou un latex NBR. Cette pré-imprégnation, optionnelle, peut également être réalisée entre l'étape 22 de séchage des torons et l'étape 24 de découpe de ceux-ci, dans le cas du procédé indirect de coupe.

Après la fourniture des torons de fibres de verre et autres composants du matériau de la garniture de friction, le procédé de fabrication de la garniture de friction se poursuit par une deuxième étape 32 de mélange (ou granulation) des torons coupés avec l'ensemble des autres composants de la garniture de friction, dans une cuve munie d'un mélangeur pour former un mélange. Cette étape de mélange est de préférence opérée dans une fourchette de température de 18 à 30°C pour éviter de dépasser les températures de transition vitreuse des éventuels polymères organiques inclus et ainsi éviter de générer l'agrégation de l'ensemble des composants rendant le mélange inutilisable.

La figure 5 illustre une cuve 34, cylindrique, munie d'un mélangeur du type à socs 36 et à couteaux 38. Les socs 36, lisses ou striées, pour une meilleure adhérence, et les couteaux 38 sont entrainés en rotation par deux systèmes d'entrainements indépendants, comprenant chacun un moteur 40, 42 et un arbre d'entraînement 44, 46 dont les socs 36, respectivement les couteaux 38, sont solidaires.

La cuve 34 peut présenter un volume utile de réception des composants à mélanger compris entre 50 et 200 L, pour une masse totale de composants à mélanger compris entre 20 et 100 kg, ces composants occupant initialement de 30 à 70% du volume de réception de la cuve 34.

À l'intérieur de la cuve, il peut y avoir deux largeurs différentes de socs, les plus larges au milieu de la cuve 34, les moins larges, ou demi-socs, plus près des extrémités de la cuve 34.

De préférence, les arrêtes des socs 36 peuvent être émoussées pour ne pas dégrader les matériaux à mélanger. La vitesse de rotation des socs est réglable par un variateur, par exemple entre 0 et 2000 tour/min. Le rôle des socs est d'homogénéiser le mélange pour former des granulés. Durant le mélange, la vitesse de rotation des socs peut être choisie entre 100 et 2000 tour/min.

Les couteaux 38 permettent eux, à l'état initial de l'étape de mélange, de diviser les différents composants de manière homogène dans la cuve et de répartir l'agent de granulation entre les matières. L'agent de granulation peut notamment être de l'eau contenant ou non un additif chimique de granulation. Les couteaux tournent à une vitesse comprise entre 100 et 3000 tour/min. De préférence, ils ne sont pas mis en œuvre (donc pas entrainés en rotation) sur la durée totale du mélange, mais uniquement sur une portion, notamment initiale, de cette étape de mélange. Par exemple, les couteux peuvent être mis en œuvre durant 20 à 50% de la durée totale de l'étape de mélange. Le temps maximum d'utilisation des couteaux est défini pour ne pas broyer les fibres qui doivent garder leur longueur initiale.

Avec un mélangeur à socs et couteaux comme décrit ci-avant, le mélange peut par exemple être réalisé en entraînant en rotation les socs pendant 8 à 30 min, de préférence entre 12 et 25 min (pour les quantités de composants indiquées ci-avant dans la cuve 34).

Sur la figure 6, les éléments identiques aux éléments de la figure 5 portent les mêmes signes de références et ne sont pas décrits à nouveaux. Dans le cas de la figure 6, le mélangeur est du type à pâles 48 et à couteaux 38.

Pour la même cuve 34 et la même quantité de composants à mélanger que ceux indiqués précédemment en regard du mélangeur à socs, les pales 48 peuvent être entraînées en rotation à une vitesse comprise entre 100 et 1500 tour/min, durant la totalité de la durée de l'étape de mélange. Cette étape peut ici durée entre 8 min à 30 min, de préférence entre 12 et 25 minutes. Les couteaux 38 sont de préférence entraînés en rotation pendant une durée comprise entre 10% (pour une étape de mélange plus longue) et 50% (pour une étape de mélange plus courte) de l'étape de mélange.

Le procédé de fabrication de la garniture de friction se poursuit, après l'étape de mélange 32, par une étape 50 de transfert du mélange et de thermocompression sur un support, par exemple métallique, notamment en acier, pour mettre en forme la garniture de friction. Le support assure une fonction de résistance à l'éclatement de la garniture de friction. Un tel procédé de fabrication peut permettre de réaliser une garniture de friction présentant une épaisseur hors support de 2,4 mm ou moins. La thermocompression consiste en un surmoulage par compression à chaud du mélange sur le support, sous pression, par exemple comprise entre 100 et 300 bar, et à chaud, par exemple sous une température de 140 à 220°C. En variante, la mise en forme de la garniture de friction peut être réalisée par réalisation d'une préforme par compression à froid, avant cuisson de la préforme.

Le procédé de fabrication peut se poursuivre alors par une étape 52 de stabilisation thermique et d'usinage. La stabilisation thermique peut consister à maintenir la garniture de friction sous température, par exemple entre 200 et 300 °C, pendant plusieurs heures. L'usinage qui s'en suit peut notamment permettre d'aplanir la surface de la garniture de friction (rectification) et/ou de réaliser des trous de fixation de la garniture de friction. A l'issue de cette étape, on obtient une garniture de friction 1 du type illustré à la figure 1, prête à être assemblée dans un embrayage à sec, de manière à pouvoir être sélectivement enserrée entre un plateau de pression et un plateau de réaction de l'embrayage à sec.

Pour obtenir une garniture de friction présentant les meilleurs propriétés, les fibres de verre utilisées peuvent répondre à une ou plusieurs des caractérisations suivantes, de préférence à toutes les caractérisations suivantes.

Tout d'abord, les fibres de verre peuvent être de type E. En d'autres termes, les fibres de verres peuvent comprendre, en masse :
- 50 à 60%, de préférence sensiblement 54%, de silice amorphe (ou non-cristalline) SiO₂ ;
- 10 à 15%, de préférence sensiblement 14 %, d'alumine Al₂O₃ ;
- 20 à 30%, de préférence sensiblement 25%, d'oxyde de calcium CaO ;
- 0 à 5%, de préférence 3%, d'oxyde de magnésium MgO.

Les fibres de verre peuvent également comprendre l'un au moins parmi :
- du carbonate de sodium, Na₂CO₃, dans une proportion massique comprise entre 0,5 et 1% ; de préférence égale à 0,8% ;
- du trioxyde de bore, B₂O₃, dans une proportion massique comprise entre 0 et 8% ;
- de l'oxyde de fer (III), Fe₂O₃, dans une proportion massique comprise entre 0 et 0,5%, de préférence égale à 0,3% ; et
- du dioxyde de titane, TiO₂, dans une proportion massique entre 0 et 1%, de préférence égale à 0,5%.

Les fibres de verre peuvent être de type Roving et/ou ensimées avec un ensimage compatible avec les résines phénoliques et/ou polyesters, l'ensimage représentant entre 0,5 et 2% de la masse des fibres de verre, de préférence 0,8% de la masse des fibres de verre. Les fibres optiques sont dites de type Roving quand elles sont groupées ensemble sous forme de toron par ensimage.

Les fibres de verre peuvent présenter une masse linéique comprise entre 400 et 1000 tex. Cette masse linéique peut notamment être mesurée avant découpe des torons de fibres de verre.

En effet, il a été constaté qu'avec des fibres de verre initiales présentant une masse linéique inférieure à 400 tex, il existant un risque de décohésion des fibres de verre dans les torons, notamment durant l'étape de mélange, entrainant des enchevêtrements partiels de fibres de verre. Ces enchevêtrements forment des espèces de bouloches, dont il a été constaté qu'ils étaient nuisible à la résistance à l'usure et à l'homogénéité du coefficient de frottement de la garniture de frottement. Notamment, avec des fibres de verre de masse linéique égale à 260 tex, il a été constaté dans certains tests des enchevêtrements de diamètre supérieur à 5 mm, représentant de 1 à 20% en masse du mélange fini. De tels enchevêtrements n'ont pas été constatés ou pas dans de telles proportions avec des fibres de verres de masse linéique supérieur à 400 tex, les torons de fibres de verre restant cohésifs.

Les fibres de verre peuvent présenter une masse volumique apparente comprise entre 0,55 g/cm³ et 1 g/cm³. De préférence, la masse volumique apparente est supérieure à 0,6 g/cm³. De préférence, également, la masse volumique apparente est inférieure à 0,8 g/cm³.

Les fibres de verre mises en œuvre peuvent également présenter une vitesse d'écoulement comprise entre 2,2 et 3,2 cm³/s, de préférence sensiblement égale à 2,7 cm³/s.

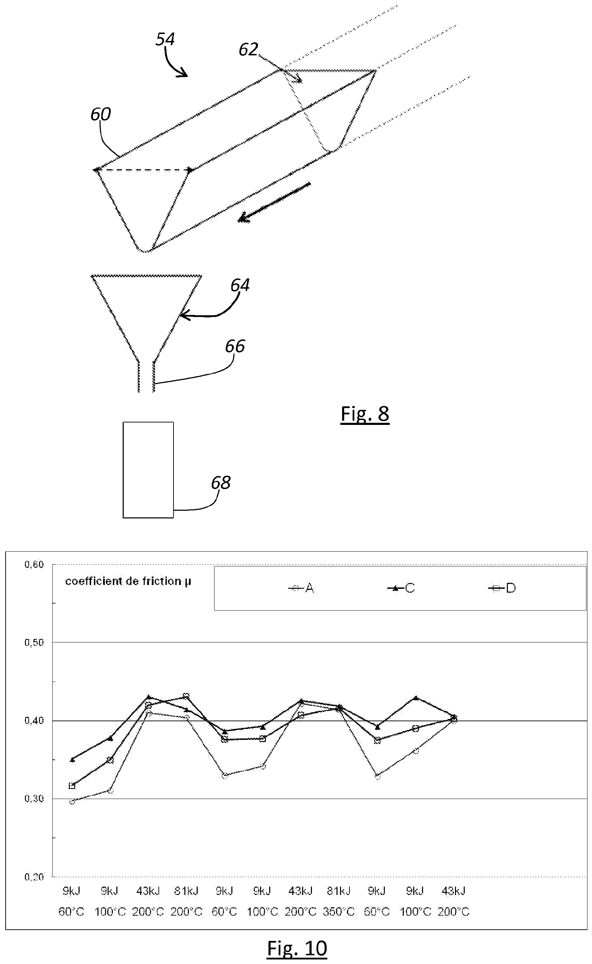

La vitesse d'écoulement peut notamment être déterminée comme suit, en mettant en œuvre un dispositif de détermination de la vitesse d'écoulement 54 tel qu'illustré à la figure 8.

Ce dispositif 58 comporte un couloir vibrant 60, ici un couloir vibrant de la marque KTG Engelhardt, modèle PG0.1. Le couloir vibrant 60 est ici de section triangulaire, de base 8 cm et de côté 6 cm. La pointe du triangle est légèrement courbe, sur une largeur de 1 cm. Le couloir vibrant 60 présente une longueur de 39 cm. Le couloir vibrant 60 est muni ici d'une trappe 62 à 14 cm de l'extrémité du couloir vibrant 60 pour le parcours des échantillons à tester. Le couloir vibrant 60 est ici en acier inoxydable. La fréquence et l'amplitude des vibrations du couloir vibrant 60 peuvent être réglées à l'aide de potentiomètres.

Le dispositif 58 comporte également un entonnoir 64 pour recevoir les échantillons arrivés à l'extrémité du couloir vibrant 60. L'entonnoir présente une section tronconique de grand diamètre 8 cm, de petit diamètre 0,8 cm et de hauteur 6 cm. L'entonnoir 64 présente également un col 68 de longueur 3 cm et de section 0,8 cm.

Le dispositif 58 comporte enfin un tube volumétrique 68 pour collecter les échantillons traversant le col 68 de l'entonnoir 64.

Pour une fréquence et une amplitude données des vibrations du couloir vibrant 60, on définit un écoulement comme le volume de fibres ayant rempli le tube volumétrique 68 par unité de temps, le passage des fibres s'arrêtant lorsque l'ouverture dans l'entonnoir 66 s'est bouchée. En d'autres termes, l'écoulement est égal au rapport du volume de fibres dans le tube volumétrique 68 au moment où l'ouverture de l'entonnoir s'est bouchée, sur le temps nécessaire pour que cette ouverture se bouche.

Pour le réglage du déplacement des fibres à tester dans le couloir vibrant, des billes de verre de calibration de tamis sont utilisées. Il s'agit de billes Whitehouse Scientific, de taille 3,35 mm, c'est-à-dire des billes de taille proche de la longueur souhaitée des fibres de verre. 25 g de billes de calibration de taille 3,35 mm sont placées dans le couloir vibrant 60, la trappe 62 étant fermée, soit sur une longueur de 14 cm. Pour un réglage du potentiomètre à 4,5, 100% des billes à plus ou moins une bille près s'écoule du couloir vibrant vers l'entonnoir en un temps de 23 s, plus ou moins 3 s. Pour un autre potentiomètre, le réglage est à réaliser pour obtenir la même vitesse d'écoulement des billes de verre de calibration.

Pour réaliser le test d'un échantillon à proprement parler, on place 50 g de l'échantillon dans le couloir vibrant 60, trappe 62 fermée. La mesure consiste à détecter l'arrêt de l'écoulement de l'échantillon traversant l'ouverture de l'entonnoir 64 vers le tube volumétrique 68 du fait de la formation d'un bouchon. Le volume d'échantillon dans l'éprouvette est mesuré en fonction du temps d'écoulement, c'est-à-dire le temps entre le début de l'essai et la formation du bouchon empêchant l'écoulement de l'échantillon de l'entonnoir 64 vers le tube volumétrique.

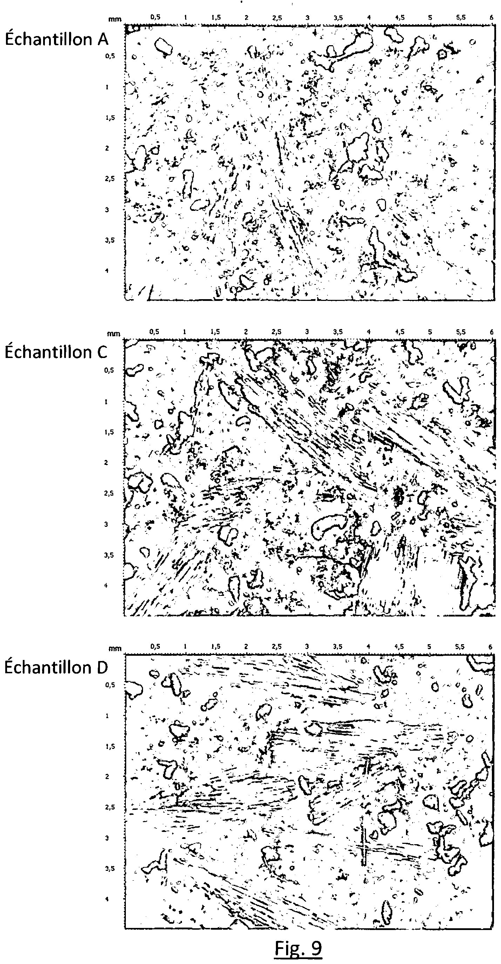

Sur la figure 9, on a représenté des agrandissements de la surface de garnitures de friction réalisée à partir de fibres de verre différentes, la composition du mélange de la garniture étant par ailleurs identique.

L'échantillon A correspond à des fibres de verre de type E présentant une masse linéique de 204 tex, une masse volumique apparente de 0,49 g/cm³, un écoulement de 1,2 cm³/s. En outre, l'ensimage des fibres de verre dans les torons est du type phénolique.

L'échantillon C correspond à des fibres de verre de type E présentant une masse linéique de 600 tex, une masse volumique apparente de 0,64 g/cm³, un écoulement de 2,8 cm³/s. En outre, l'ensimage des fibres de verre dans les torons est du type phénolique.

L'échantillon D correspond à des fibres de verre de type E présentant une masse linéique de 996 tex, une masse volumique apparente de 0,9 g/cm³, un écoulement de 3,2 cm³/s. En outre, l'ensimage des fibres de verre dans les torons est du type phénolique.

Comme cela est visible sur la figure, dans le cas de l'échantillon A, la réalisation du mélange des composants a provoqué un éclatement important des torons. La cohésion des fibres n'est pas toujours satisfaisante et un enchevêtrement des fibres de verre se produit. On observe de petites surfaces de torons de fibres.

Par ailleurs, l'éclatement des torons de fibres de l'échantillon A entraine l'augmentation du volume de mélange dans la cuve de mélange durant l'étape de mélange. Ceci peut provoquer une contrainte mécanique au niveau des mélangeurs. L'augmentation de la force mécanique de mélange accélère de plus l'élévation de la température par friction entre les composants du mélange. Les transitions vitreuses des résines peuvent être dépassées et un collage important des composants peut se produire rendant le mélange final inutilisable, si le temps n'est pas ajusté à une durée plus courte.

L'éclatement des torons de fibres de verre réduit également l'écoulement des fibres de verre et du mélange, rendant les transferts de ces matières difficiles, voire impossibles, de fait de la formation possible de bouchons.

L'éclatement des torons de fibres peut également conduire à une possible ségrégation des matériaux présents. Ainsi, par exemple, le cuivre et le laiton, plus dense, le verre, de densité intermédiaire, et la résine liantes et les autres composants organiques ne sont plus répartis de manière homogène et répétable, en fonction de leur masse volumique respective. Le matériau obtenu est alors inhomogène.

Enfin, l'éclatement des torons de fibres de verre réduit la masse volumique du mélange. Si cette masse volumique est trop faible, pour une masse de la pièce définie, constante, le volume utile est plus grand. Cependant, la contenance du moule de mise en forme de la garniture de friction est fixe et peut, dans ces conditions, être insuffisante. L'environnement de cuisson, le cas échéant, n'est pas non plus flexible en termes d'augmentation d'espace de machine et d'outillage.

Au contraire, dans le cas des échantillons C et D, la réalisation du mélange, avec les mêmes paramètres que pour l'échantillon A, le problème d'ouverture des torons en fibres de verre élémentaires est absent, les torons restant cohésifs. On observe de grandes surfaces de torons de fibres de verre.

Pour les fibres des échantillons C et D, l'absence de décohésion et d'ouverture des fibres permet d'avoir un volume stable dans la cuve. Les efforts mécaniques de mélange restent sensiblement constants et l'échauffement des composants est limité. Les autres problèmes mentionnés ci-dessus relatifs notamment à l'écoulement des torons ou fibres de verre, au transfert et à la mise en forme du mélange n'apparaissent pas.

La figure 10 illustre la variation du coefficient de friction des échantillons A, C et D au cours d'un test d'usure.

Le test d'usure a consisté à soumettre un embrayage de transmission manuelle muni de deux garnitures de friction identiques, à 3 600 cycles d'embrayage, réalisés sous une charge de 3 000 N. Les cycles représentent des démarrages sur un sol plan, à faible énergie engagée (ici, 9 KJ), des démarrages en pente à moyenne énergie engagée (ici, 43 KJ) et des démarrages en pente avec une remorque à forte énergie engagée (ici, 81KJ).

Comme cela est visible sur la figure 10, le coefficient de friction est sensiblement plus constant dans le cas des échantillons C et D, que dans le cas de l'échantillon A. Notamment, le coefficient de frottement des échantillons C et D est meilleur que celui de l'échantillon A, à basses températures, notamment entre 60 et 100 °C.

Par ailleurs, suite au test, l'épaisseur des garnitures de frottement a été mesurée. Il a été constaté que :
- la diminution de l'épaisseur de la garniture de frottement incluant les fibres de verre de l'échantillon C, sous charge, était inférieure de 12 % à celle de la garniture de frottement incluant les fibres de verre de l'échantillon A ; et que
- la diminution de l'épaisseur de la garniture de frottement sous charge incluant les fibres de verre de l'échantillon D, sous charge, était inférieure de 24 % à celle de la garniture de frottement incluant les fibres de verre de l'échantillon A.

Bien entendu, la présente invention n'est pas limitée à la description qui vient d'en être donnée. Bien au contraire, l'invention est susceptible de nombreuses variantes accessibles à l'homme de l'art, dans le cadre du jeu de revendications ci-joint.

Par exemple, la géométrie de la garniture de friction n'est nullement limitée à celle illustrée sur la figure 1 et décrite ci-avant. La garniture de friction peut présenter toute forme, de préférence annulaire.

## Revendications

1. Garniture de friction (1), notamment pour embrayage à sec, en particulier pour véhicule automobile, comportant, en masse, 10 à 20%, de préférence 12 à 15%, de fibres de verre, plus de 90 %, en masse, des fibres de verres étant groupées sous forme de torons de fibres de verre (14) de longueur supérieure à 2,5 mm, de préférence supérieure à 2,8 mm, et inférieure à 4 mm, de préférence inférieure à 3,6 mm, plus de 30% en nombre des torons de fibres de verre (14) présentant une largeur supérieure à 0,5 mm.

2. Garniture de friction selon la revendication 1, dans laquelle les torons de fibres de verre (14) présentent une largeur moyenne supérieure à 0,4 mm, de préférence supérieure à 0,45 mm.

3. Garniture de fiction selon la revendication 1 ou 2, dans laquelle 30% en nombre de torons de fibres de verre (14) ou moins présentent une largeur inférieure à 0,25 mm.

4. Garniture de friction selon l'une des revendications 1 à 3, comprenant en outre, en masse :
- 20 à 40%, de préférence 30 à 35%, de résine liante ; et/ou
- 0 à 5% de fibres autres que des fibres de verre ; et/ou
- 10 à 30%, de préférence 20 à 25%, d'autres composants organiques ; et/ou
- le complément à 100% d'autres composants inorganiques, de préférence de 10%, de préférence encore de 20%, à 40%, de préférence encore à 30%.

5. Garniture de friction selon l'une quelconque des revendications précédentes, dans laquelle les fibres de verre :
- sont de type E, comprenant, en masse :
∘ 50 à 60%, de préférence sensiblement 54%, de SiO₂ amorphe ;
∘ 10 à 15%, de préférence sensiblement 14 %, d'Al₂O₃ ;
∘ 20 à 30%, de préférence sensiblement 25%, de CaO ;
∘ 0 à 5%, de préférence 3%, de MgO ; et/ou
- sont de type Roving et/ou sont ensimées avec un ensimage compatible avec les résines phénoliques et/ou polyesters, l'ensimage représentant entre 0,5 et 2% de la masse des fibres de verre, de préférence 0,8% de la masse des fibres de verre ; et/ou présentent
- une masse linéique comprise entre 400 et 1000 tex, de préférence égale à 600 tex, et/ou
- une masse volumique apparente supérieure à 0,55 g/cm³, de préférence supérieure à 0,6 g/cm³, et inférieure à 1 g/cm³, de préférence inférieure à 0,8 g/cm³, et/ou
- une vitesse d'écoulement comprise entre 2,2 et 3,2 cm³/s, de préférence sensiblement égale à 2,7 cm³/s.

6. Garniture de friction selon l'une quelconque des revendications précédentes, dans laquelle :
- la résine liante est choisie parmi le groupe constitué d'une résine phénolique, novolaque ou résol, d'une résine mélamine formaldéhyde, d'une résine RFL, d'une résine époxy, d'une résine polyméthyl siloxane, poly imide, polyamide imide, et des mélanges de celles-ci ; et/ou
- les autres composants organiques sont choisis dans le groupe constitué de noix de cajou, de noir de carbone, de graphite, de charbon actif, de caoutchouc NBR, de caoutchouc SBR, et des mélanges de ceux-ci ; et/ou
- les autres composants inorganiques sont choisis dans le groupe constitué de poudre de cuivre, de poudre de laiton, de sulfate de baryum, de carbonate de calcium, d'oxyde de fer micacé, de zircone stabilisée, de zéolithe, de kaolin calciné, et des mélanges de ceux-ci ; et/ou
- les autres fibres que les fibres de verre sont choisies parmi le groupe constitué de fibres de poly-acrylonitrile, de fibres de cellulose, de fibres d'aramide, de fibres de carbone et des mélanges de celles-ci.

7. Embrayage, notamment embrayage à sec, en particulier pour véhicule automobile, comportant au moins une garniture de friction (1), de préférence au moins deux, de préférence encore au moins quatre, selon l'une quelconque des revendications précédentes.

8. Procédé de fabrication d'une garniture de friction (1), comprenant les étapes consistant à :
a) fournir des fibres de verre sous forme de torons coupés,
b) mélanger les torons coupés avec l'ensemble des autres composants dans une cuve (34) munie d'un mélangeur pour former un mélange,
c) mettre en forme le mélange, notamment par surmoulage sur un support, de préférence métallique,
les fibres de verre, les autres composants et les étapes consistant à mélanger et à mettre en forme le mélange étant adaptés de manière à obtenir, à l'issue de l'étape c), une garniture de friction (1) selon l'une quelconque des revendications 1 à 6.

9. Procédé selon la revendication 8, dans lequel l'étape a) comprend les sous-étapes consistant à :
a1) former des filaments de fibres de verre à travers des platines à cavités micrométriques,
a2) pulvériser une solution aqueuse contenant un agent de cohésion pour assembler les filaments de fibres de verre ensemble et former ainsi un toron de filaments,
a3) optionnellement, séchage du toron de filaments pour former un toron de fibres de verre,
a4) découpe du toron de filaments ou de fibres de verre, le cas échéant, par exemple au moyen de rouleaux cylindriques munis de couteaux espacés de la longueur de coupe désirée, et
a5) optionnellement, séchage du toron de filaments coupé.

10. Procédé selon la revendication 8 ou 9, dans lequel le mélangeur est choisi parmi le groupe constitué d'un mélangeur à pales (48), d'un mélangeur à socs (36), d'un mélangeur à couteaux rotatifs (38) et des combinaisons de ceux-ci.

11. Procédé de fabrication d'un embrayage, notamment d'un embrayage à sec, en particulier pour véhicule automobile, selon la revendication 7, comprenant les étapes consistant à :
i) fournir une garniture de friction (1) selon l'une quelconque des revendications 1 à 6, en particulier en mettant en œuvre un procédé de fabrication selon l'une quelconque des revendications 8 à 10 ; et
ii) assembler la garniture de friction (1) dans l'embrayage de manière qu'elle puisse être sélectivement enserrée entre un plateau de pression et un plateau de réaction de l'embrayage.

## Patentansprüche

1. Reibbelag (1), insbesondere für Trockenkupplung, insbesondere für Kraftfahrzeuge, welcher 10 bis 20 %, vorzugsweise 12 bis 15 %, nach Masse, an Glasfasern aufweist, wobei mehr als 90 %, nach Masse, der Glasfasern in Form von Glasfasersträngen (14) mit einer Länge von mehr als 2,5 mm, vorzugsweise von mehr als 2,8 mm, und von weniger als 4 mm, vorzugsweise von weniger als 3,6 mm, zusammengefasst sind, wobei mehr als 30 % der Glasfaserstränge (14), nach Anzahl, eine Breite von mehr als 0,5 mm aufweisen.

2. Reibbelag nach Anspruch 1, wobei die Glasfaserstränge (14) eine mittlere Breite von mehr als 0,4 mm, vorzugsweise von mehr als 0,45 mm, aufweisen.

3. Reibbelag nach Anspruch 1 oder 2, wobei höchstens 30 % der Glasfaserstränge (14), nach Anzahl, eine Breite von weniger als 0,25 mm aufweisen.

4. Reibbelag nach einem der Ansprüche 1 bis 3, der darüber hinaus Folgendes umfasst, nach Masse:
- 20 bis 40 %, vorzugsweise 30 bis 35 %, an Bindemittelharz; und/oder
- 0 bis 5 % an anderen Fasern als Glasfasern; und/oder
- 10 bis 30 %, vorzugsweise 20 bis 25 %, an weiteren organischen Bestandteilen; und/oder
- den zu 100 % fehlenden Anteil an weiteren anorganischen Bestandteilen, nämlich vorzugsweise 10 %, mit noch größerem Vorzug 20 % bis 40 %, mit noch größerem Vorzug bis 30 %.

5. Reibbelag nach einem beliebigen der vorhergehenden Ansprüche, wobei die Glasfasern:
- vom Typ E sind, wobei sie Folgendes umfassen, nach Masse:
∘ 50 bis 60 %, vorzugsweise im Wesentlichen 54 %, an amorphem SiO₂;
∘ 10 bis 15 %, vorzugsweise im Wesentlichen 14 %, an Al₂O₃;
∘ 20 bis 30 %, vorzugsweise im Wesentlichen 25 %, an CaO;
∘ 0 bis 5 %, vorzugsweise 3 %, an MgO; und/oder
- vom Typ Roving sind und/oder mit einer Schlichte beschlichtet sind, die mit den Phenol- und/oder Polyesterharzen verträglich ist, wobei die Schlichte zwischen 0,5 und 2 % der Masse an Glasfasern, vorzugsweise 0,8 % der Masse an Glasfasern, ausmacht; und/oder sie Folgendes aufweisen:
- eine Feinheit im Bereich von 400 bis 1000 tex, wobei diese vorzugsweise gleich 600 tex ist, und/oder
- eine Schüttdichte von mehr als 0,55 g/cm³, vorzugsweise von mehr als 0,6 g/cm³, und von weniger als 1 g/cm³, vorzugsweise von weniger als 0,8 g/cm³, und/oder
- eine Fließgeschwindigkeit im Bereich von 2,2 bis 3,2 cm³/s, wobei diese vorzugsweise im Wesentlichen gleich 2,7 cm³/s ist.

6. Reibbelag nach einem beliebigen der vorhergehenden Ansprüche, wobei:
- das Bindemittelharz aus der Gruppe ausgewählt ist, die aus einem Phenolharz, Novolak oder Resol, einem Melamin-Formaldehyd-Harz, einem RFL-Harz, einem Epoxidharz, einem Polymethyl-Siloxan-Harz, Polyimid, Polyamidimid und aus Mischungen derselben besteht; und/oder
- die weiteren organischen Bestandteile aus der Gruppe ausgewählt sind, die aus Cashewkernen, Ruß, Graphit, Aktivkohle, NBR-Kautschuk, SBR-Kautschuk und aus Mischungen derselben besteht; und/oder
- die weiteren anorganischen Bestandteile aus der Gruppe ausgewählt sind, die aus Kupferpulver, Messingpulver, Bariumsulfat, Calciumcarbonat, glimmerartigem Eisenoxid, stabilisiertem Zirkoniumdioxid, Zeolith, gebranntem Kaolin und aus Mischungen derselben besteht; und/oder
- die anderen Fasern als die Glasfasern aus der Gruppe ausgewählt sind, die aus Polyacrylnitrilfasern, Zellulosefasern, Aramidfasern, Kohlenstofffasern und aus Mischungen derselben besteht.

7. Kupplung, insbesondere Trockenkupplung, insbesondere für Kraftfahrzeuge, die mindestens einen Reibbelag (1) nach einem beliebigen der vorhergehenden Ansprüche, vorzugsweise mindestens zwei, mit noch größerem Vorzug mindestens vier davon aufweist.

8. Verfahren zur Herstellung eines Reibbelags (1), das die folgenden Schritte umfasst:
a) Bereitstellen von Glasfasern in Form von geschnittenen Strängen,
b) Mischen der geschnittenen Stränge mit der Gesamtheit der übrigen Bestandteile in einem Behälter (34), der mit einer Mischvorrichtung ausgestattet ist, um eine Mischung zu bilden,
c) Formen der Mischung, insbesondere durch Anformen an einen Träger, vorzugsweise aus Metall,
wobei die Glasfasern, die weiteren Bestandteile und die Schritte, welche darin bestehen, einen Mischvorgang durchzuführen und die Mischung zu formen, dafür geeignet sind, nach Abschluss des Schrittes c) einen Reibbelag (1) nach einem beliebigen der Ansprüche 1 bis 6 zu erhalten.

9. Verfahren nach Anspruch 8, wobei der Schritt a) die Teilschritte umfasst, die aus Folgendem bestehen:
a1) Bilden von Glasfaserfilamenten mittels Platinen mit Hohlräumen im Mikrometermaßstab,
a2) Vernebeln einer wässrigen Lösung, die ein Haftmittel enthält, um die Glasfaserfilamente zusammenzufügen und auf diese Weise einen Strang aus Filamenten zu erhalten,
a3) möglicherweise, Trocknen des Strangs aus Filamenten, um einen Strang aus Glasfasern zu bilden,
a4) Zuschneiden des Strangs aus Filamenten oder, gegebenenfalls, aus Glasfasern, beispielsweise mittels zylindrischer Rollen, die mit Messern versehen sind, deren Abstand der gewünschten Schnittlänge entspricht, und
a5) möglicherweise, Trocknen des geschnittenen Strangs aus Filamenten.

10. Verfahren nach Anspruch 8 oder 9, wobei die Mischvorrichtung aus der Gruppe ausgewählt ist, welche aus einem Mischer mit Schaufeln (48), einem Mischer mit Scharen (36), einem Mischer mit Drehmessern (38) und aus Kombinationen derselben besteht.

11. Verfahren zur Herstellung einer Kupplung, insbesondere einer Trockenkupplung, insbesondere für Kraftfahrzeuge, nach Anspruch 7, wobei es die folgenden Schritte umfasst:
i) Bereitstellen eines Reibbelags (1) nach einem beliebigen der Ansprüche 1 bis 6, indem insbesondere ein Herstellungsverfahren nach einem beliebigen der Ansprüche 8 bis 10 durchgeführt wird; und
ii) Anbringen des Reibbelags (1) innerhalb der Kupplung, derart, dass er auf selektive Weise zwischen einer Druckplatte und einer Schwungscheibe der Kupplung eingeklemmt werden kann.

## Claims

1. Friction lining (1), notably for a dry clutch, in particular for a motor vehicle, comprising, by weight, 10 to 20%, preferably 12 to 15%, of glass fibres, more than 90%, by weight, of the glass fibres being grouped in the form of strands of glass fibres (14) with a length of greater than 2.5 mm, preferably greater than 2.8 mm, and less than 4 mm, preferably less than 3.6 mm, more than 30% by number of the strands of glass fibres (14) having a width of greater than 0.5 mm.

2. Friction lining according to Claim 1, in which the strands of glass fibres (14) have a mean width of greater than 0.4 mm, preferably greater than 0.45 mm.

3. Friction lining according to Claim 1 or 2, in which 30% by number of strands of glass fibres (14) or less have a width of less than 0.25 mm.

4. Friction lining according to one of Claims 1 to 3, further comprising, by weight:
- 20 to 40%, preferably 30 to 35%, of binder resin; and/or
- 0 to 5% of fibres other than glass fibres; and/or
- 10 to 30%, preferably 20 to 25%, of other organic components; and/or
- the balance to 100% of other inorganic components, preferably from 10%, more preferably from 20%, to 40%, more preferably to 30%.

5. Friction lining according to any one of the preceding claims, in which the glass fibres:
- are of E type, comprising, by weight:
∘ 50 to 60%, preferably substantially 54%, of amorphous SiO₂;
∘ 10 to 15%, preferably substantially 14%, of Al₂O₃ ;
∘ 20 to 30%, preferably substantially 25%, of CaO;
∘ 0 to 5%, preferably 3%, of MgO; and/or
- are of Roving type and/or are sized with a size compatible with the phenolic and/or polyester resins, the size representing between 0.5 and 2% of the weight of the glass fibres, preferably 0.8% of the weight of the glass fibres; and/or have
- a linear density of between 400 and 1000 tex, preferably equal to 600 tex, and/or
- a bulk density of greater than 0.55 g/cm³, preferably greater than 0.6 g/cm³, and less than 1 g/cm³, preferably less than 0.8 g/cm³, and/or
- a flow rate of between 2.2 and 3.2 cm³/s, preferably substantially equal to 2.7 cm³/s.

6. Friction lining according to any one of the preceding claims, in which:
- the binder resin is selected from the group consisting of a phenolic, novolac or resol resin, a melamine formaldehyde resin, an RFL resin, an epoxy resin, a polymethylsiloxane, polyimide or polyamide-imide resin, and mixtures thereof; and/or
- the other organic components are selected from the group consisting of cashew nuts, carbon black, graphite, activated carbon, NBR rubber, SBR rubber, and mixtures thereof; and/or
- the other inorganic components are selected from the group consisting of copper powder, brass powder, barium sulfate, calcium carbonate, micaceous iron oxide, stabilized zirconia, zeolite, calcined kaolin, and mixtures thereof; and/or
- the fibres other than glass fibres are selected from the group consisting of polyacrylonitrile fibres, cellulose fibres, aramid fibres, carbon fibres and mixtures thereof.

7. Clutch, notably dry clutch, in particular for a motor vehicle, comprising at least one friction lining (1), preferably at least two, more preferably at least four, according to any one of the preceding claims.

8. Process for manufacturing a friction lining (1), comprising the steps consisting in:
a) providing glass fibres in the form of chopped strands,
b) mixing the chopped strands with all of the other components in a tank (34) equipped with a mixer in order to form a mixture,
c) shaping the mixture, notably by overmoulding on a support, preferably a metal support,
the glass fibres, the other components and the steps consisting in mixing and in shaping the mixture being adapted so as to obtain, at the end of step c), a friction lining (1) according to any one of Claims 1 to 6.

9. Process according to Claim 8, in which step a) comprises the substeps consisting in:
a1) forming filaments of glass fibres through plates having micrometric cavities,
a2) spraying an aqueous solution containing a cohesion agent in order to assemble the filaments of glass fibres together and thus form a strand of filaments,
a3) optionally, drying the strand of filaments in order to form a strand of glass fibres,
a4) cutting the strand of filaments or of glass fibres, where appropriate, for example by means of cylindrical rollers equipped with knives spaced out by the desired cutting length, and
a5) optionally, drying the chopped strand of filaments.

10. Process according to Claim 8 or 9, in which the mixer is selected from the group consisting of a blade mixer (48), a ploughshare mixer (36), a rotary blade mixer (38) and combinations thereof.

11. Process for manufacturing a clutch, notably a dry clutch, in particular for a motor vehicle, according to Claim 7, comprising the steps consisting in:
i) providing a friction lining (1) according to any one of Claims 1 to 6, in particular by using a manufacturing process according to any one of Claims 8 to 10; and
ii) assembling the friction lining (1) in the clutch so that it can be selectively gripped between a pressure plate and a reaction plate of the clutch.
